# EUROPEAN PATENT SPECIFICATION

(11) **EP 0 428 626 B1**
(45) Date of publication and mention of the grant of the patent: **29.09.1993**
(21) Application number: 89911129.8
(22) Date of filing: 03.07.1989
(51) Int. Cl.: G06F 15/70, H04N 5/217

(54) **AUTOMATED SYSTEM FOR TESTING AN IMAGING SENSOR**
AUTOMATISIERTES SYSTEM ZUR PRÜFUNG EINES BILDSENSORS
SYSTEME AUTOMATIQUE POUR TESTER UN CAPTEUR D'IMAGERIE

(30) Priority: 12.08.1988 US 231319
(43) Date of publication of application: 29.05.1991
(73) Proprietor: Hughes Aircraft Company, Los Angeles, California 90045-0066 (US)
(72) Inventor: ZWIRN, Robert, Los Angeles, CA 90064 (US)
(74) Representative: KUHNEN, WACKER & PARTNER
(86) International application number: US8902876
(87) International publication number: WO9001747

(56) References cited:
- EP-A- 0 089 203
- EP-A- 0 142 990
- US-A- 4 326 219

## Description

### BACKGROUND OF THE INVENTION

### Field of the Invention:

The present invention relates to automated testing systems. More specifically, the present invention relates to automated systems for testing imaging sensors to qualify the sensor performance in the area of minimal resolvable signatures.

### Description of the Related Art:

It is currently common practice to use human observers to rate, evaluate and otherwise determine if an imaging sensor meets specifications. The use of human observers for testing the imaging sensor has several drawbacks.

In most cases, the human observer must be specially trained. This training is generally both time consuming and costly. In addition, human observers vary, even after such special training, in the determination of acceptable output for the sensor under test. The lack of repeatability of human perception of sensor output for both an individual human observer and between groups of human observers can increase the occurrence of improper rating of imaging sensors. Also, because imaging sensors are evaluated via subjective visual displays, it may be difficult to determine if the output from an imaging sensor meets objective specifications.

Applications for imaging sensors include infrared systems used by ground and airborne military personnel, radar systems for aircraft detection and navigation, and television systems for visual monitoring. Each application may impose a different set of requirements on the imaging sensor. Under these circumstances, when human observers are employed to test the sensors, it may be difficult to obtain an appropriate standard by which to measure sensor outputs.

In some cases, the standard by which the sensors are measured may be based on the perception of some specific group of the human observers over a given sample or time period. Unfortunately, as human observers vary, from day-to-day, in ability to properly evaluate a sensor, some sensors may be deemed acceptable, under such a standard, when the sensor is faulty, or vice versa.

In addition to the fact that the human determination of sensor acceptability can be time consuming, many adverse consequences are known to follow from an improper evaluation of a sensor. Acceptable sensors thought to be faulty can be costly to replace or repair. The identification and replacement of an improperly passed sensor by an end user may be costly as well. Additional expenses may be incurred in shipping, receiving, evaluating and reshipping such sensors.

Further, a human rating of an imaging sensor can typically be performed only when the sensor assembly is completed such that a visual output may be obtained. This late testing of sensors is problematic in that faults can not be detected early in the assembly of the sensor. Problems found in completed sensor assemblies are typically much more costly to correct than those discovered in subassemblies prior to integration. That is, faulty components may not be replaced and improper assembly may not be corrected prior to completion of the sensor assembly.

Document US-A-4 326 219 relates to a digital error measuring circuit for shading and registration errors in television cameras. To provide measurement of horizontal and vertical spatial errors, as well as shading errors, the active video picture is divided horizontally into 13 equal blocks, and vertically into 14 bands of checkers. During the setup mode, the signal from a selected camera is fed to an A/D converter in the video signal path, and to sync and pattern validation circuits which provide control and timing signals and an electronic test pattern signal. Horizontal error measurement is provided via a horizontal adder/memory loop whereby selected samples within the blocks of successive horizontal lines are selectively summed to provide successive pairs of summed horizontal digital data. Vertical error measurement is done simultaneously by a vertical adder/memory circuit whereby selected adjacent samples of alternate checkers are selectively delayed and added, to provide succesive pairs of summed vertical digital data. During a read cycle, the horizontal and vertical pairs of digital data are selectively subtracted to inherently cancel the effects of existing shading errors, blooming, crosstalk, etc., and the difference signals are D/A converted. The horizontal and vertical transition and zero crossing information is established, and the transitions information are compared with the electronic test pattern signal to derive the digital horizontal and vertical spatial error data for storage in a microprocessor memory. Shading error data are provided from the vertical adder/memory circuit and also are stored in the microprocessor memory. The stored error data are subsequently retrieved and used to provide spatial and shading correction during the camera operating mode. However, this prior art document does not teach to provide an apparatus or method for optimally determining the acceptability of a sensor system. There is therefore a need in the art for a test system or method for accurately and repeatably determining the acceptability of sensor outputs rapidly and early in the manufacturing cycle. Ideally, the test system or method would provide a means for emulating a group of human observers to optimally determine the acceptability of an imaging sensor.

The technical problem is solved by an apparatus in accordance with claim 1 and a method in accordance with claim 13.

### SUMMARY OF THE INVENTION

The need in the art is substantially addressed by the automated system for testing imaging sensors of the present invention as claimed. The invention provides an accurate and repeatable method for testing imaging sensors. The system of the invention includes input circuitry for receiving input from an imaging sensor system and providing a signal in response thereto, a processor for operating on the signal and generating data therefrom, and a lookup table for providing output in response to the data. A specific teaching of the invention provides a method for obtaining data for the lookup table and calculating addresses for the data wherein the addresses are a function of the signal and noise components of the imaging sensor system output, while the data relates to actual responses of human observers.

### BRIEF DESCRIPTION OF THE DRAWINGS

Fig. 1 shows an infrared imaging system and a typical test setup.

Fig. 2 is a simplified block diagram of an automated system for testing a sensor system constructed in accordance with the present teachings.

Fig. 3a shows the MRT declarations of several observers as a statistical distribution of the temperature difference at each spatial frequency.

Fig. 3b shows the corresponding contribution of a function, F, for each declared MRT of each observer at each frequency.

Fig. 3c is a two dimensional depiction of the value stored in the lookup table for function F related to the temperature difference (delta T).

### DESCRIPTION OF THE INVENTION

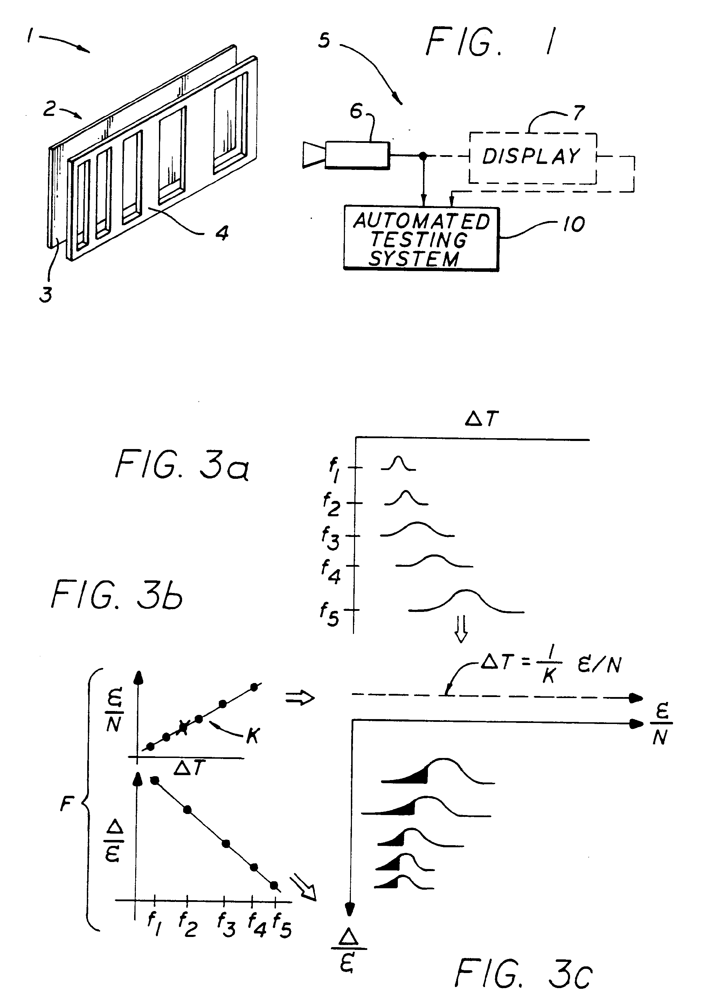

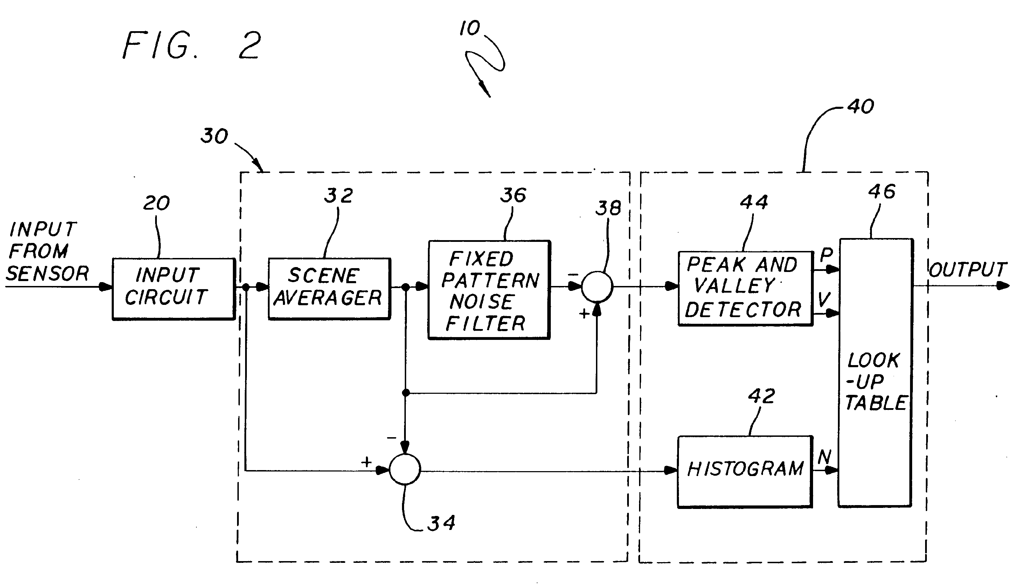

The present invention is a system which provides an accurate and repeatable method for testing a variety of imaging sensors. Fig. 1 shows a typical test setup 1 for an infrared imaging sensor system 5. The target 2 includes a black body 3 which is at one temperature and frame with a plurality of bars 4 at a second temperature. The widths of the bars 4 correspond to the desired test frequencies for the sensor system 5. The invention is not limited to the type of target employed.

The sensor system 5 includes an infrared sensor 6. The sensor system 5 may also include a display 7 (shown in phantom) . The sensor 6 views the target 2 and provides an output which may be input directly to the automated system 10 of the present invention or via a scanning of the output of the display 7. It will be appreciated by those skilled in the art that the output of the imaging sensor system may be either analog or digital.

A simplified block diagram of the automated system 10 of the present invention is shown in Fig. 2. As described more fully below, the system 10 includes an input circuit 20, an image processor 30 and a computer 40.The input circuit 20 provides an interface between the sensor system 5 and the processor 30. Those skilled in the art with access to the present teachings will be able to design a suitable input circuit capable of receiving input from the desired imaging sensor system and providing an analog or digital output to the processor 30. For example, if the input signal is analog, the input circuit 20 would include an analog-to-digital (A/D) converter to provide a digital signal to the processor 30. If, however, the output is received from the sensor 6 via the display 7, the input circuit 20 may include a television camera or other device for receiving optical input.

The processor 30 includes a scene averager 32 to remove time-random noise from the input signal leaving a stationary signature. The scene averager 32 may include memory and arithmetic circuitry for repeatedly storing and averaging successive frames of input from the sensor system or other means for removing time-random noise from the input signal.

A first subtractor 34 subtracts the pure signature from the input signal leaving pure noise. The pure noise is input to a histogram generator 42 which, along with a peak and valley detector 44 and a lookup table 46, are implemented within the computer 40 in the preferred embodiment. (The histogram generator 42 may also be implemented with a microprocessor or special purpose integrated circuit.) The histogram generator 42 provides noise data Nᵢ indicating which portion of the pure noise signal is at each of several signal levels.

The pure signature output of the scene averager 32 is provided to a noise filter 36 which provides the fixed pattern noise of the pure signature as an output. Typically, the noise filter 36 is a memory that contains the fixed pattern noise of the input signal which may be extracted by scanning a uniform scene. It will be appreciated by those skilled in the art that the type of fixed pattern noise filter 36 may vary without departing from the scope of the present invention.

A second subtractor 38 subtracts the fixed pattern noise from the pure signature leaving a pure signal. The peak and valley detector 44 receives the pure signal output from the subtractor 38. The detector 44 provides data indicating the peak Pᵢ and valley Vᵢ values of the pure signal. (The peak and valley detector may also be implemented in a microprocessor or special purpose integrated circuit and the present invention is not limited to the particular implementation thereof.)

The peak data Pᵢ, valley data Vᵢ, and noise data Nᵢ, are output to the lookup table 46. A function of Vᵢ and Nᵢ is provided as a complex address to the lookup table and the lookup table 46 provides one or more outputs which indicate the acceptability of the sensor system. The mathematical functions for F could include a square-wave modulation transfer function, (Pᵢ-Vᵢ/Pᵢ+Vᵢ), which relates directly to the response to different spatial frequencies and a function, (Pᵢ+Vᵢ/Nᵢ), which relates directly to the sensor system 5 temperature difference. For the sensor system 5, a single temperature for the bars 4 may be used because the mathematical function (Pᵢ+Vᵢ/Nᵢ) does relate directly to temperature and not to frequency. Alternately, the square-wave modulation transfer function relates to spatial frequency response and not to temperature. Those skilled in the art and with access to the present teachings will appreciate that the mathematical function, F, of the signature can include other variables and relationships in addition to Pᵢ, Vᵢ and Nᵢ without departing from the scope of the present invention.

Human observers are used initially to collect the data for the lookup table 46. The human observers control the temperature and view the output of the imaging sensor system to determine when the displayed information is acceptable. Pᵢ, Vᵢ and Nᵢ are collected for each acceptable temperature setting. For the sensor system 5, a determination of an acceptable temperature setting is made for each individual input frequency pattern. The output of the lookup table 46 can represent the judgment of any desired sub-group of the human observers. For example, the top ten percent of the human observers could be used for the data, or an average of the human observers could be used.

Figs. 3a - 3c illustrate the extraction of the lookup table data for the sensor system 5. An observer views the display 7 and declares when the bars 4 may be seen with fifty percent probability for each spatial frequency. The temperature difference (delta T) between the black body 2 and the bars 4 is recorded as the minimum resolvable temperature (MRT). Fig. 3a shows the MRT declarations of several observers as a statistical distribution of the temperature difference (delta T) at each spatial frequency. F is a function of the data Pᵢ, Vᵢ and Nᵢ. For example, Fig. 3b shows two examples of corresponding components of the function, F, for each declared MRT of each observer at each frequency. The upper figure is for the component of a function F, the sum divided by the noise, while the lower figure is for a component, the difference divided by the sum. Fig. 3c is a merging of Figs. 3a and 3b and is a two dimensional depiction of the relationship between the compound function F and the declared temperature difference, delta T.Each compound function value, F, is the address for the corresponding sum/noise distribution data and the associated acceptance criteria. For example, values of ratio of the difference to the sum (delta/sigma) intercept the operator statistical distributions to yield an acceptance limit on the ratio of the sum to noise (sigma/N). The derived scale factor, K, determines the corresponding scale for delta T which relates the sum/noise limit to a corresponding delta T criteria to complete the lookup operation shown in Fig. 3c.

Data may be collected in a similar manner for other types of sensor systems. For example, for a radar system the data may be the energy value received by the radar rather than the temperature data from the infrared sensor system 5. Likewise, for a camera system the data may represent the light received by the camera system. Those skilled in the art will appreciate that the type of data collected for the lookup table of the computer 40 may vary.

The output of the lookup table 46 indicates the data that the desired group of observers would have obtained for each spatial frequency. In addition, the output can include the functions, F, which may be useful in statistical quality control. Because the target 2 temperature differences are known, this information may be supplied to the lookup table 46 such that the lookup table 46 outputs a single number indicating the acceptability of the imaging sensor. In the alternative, the lookup table 46 can provide data for subjective diagnostics by a human operator. It will be appreciated by those skilled in the art that the type of output provided by the lookup table 46 may vary**.**

While the present invention has been described herein with reference to an illustrative embodiment and a particular application, it is understood that the invention is not limited thereto. Those having ordinary skill in the art and access to the teachings of the present invention will recognize additional modifications and applications within the scope claimed. For example, the noise data provided by the processor 30 could be displayed to facilitate the design of an imaging sensor system with less random and fixed pattern noise.

## Claims

1. A system for automated testing of a sensor system (5) by evaluating the output of said sensor system (5) with respect to a known target (2), said automated test system (10) comprising:
input means (20) for receiving optical output from said sensor system (5) and providing a first signal in response thereto;
characterized by
processing means (30,42,44) for separating said first signal into pure signal and pure noise components and providing first data (P,V,N) therefrom, wherein said processing means includes a peak and valley detector (44) to detect the peak and valley values (P,V) of said pure signal and said processing means (30) includes histogram means (42) for determining the portions (N) of said pure noise signal that are within specified ranges of values; and
a lookup table (46) containing stored data wherein said first data is provided as an input to said lookup table (46) and an output indicating the acceptability of said sensor system (5) is provided in response thereto.

2. The system of claim 1 wherein said sensor system (5) includes camera means (6).

3. The system of claims 1 or 2 wherein said processing means includes scene averaging means (32) coupled to the output of said input means (20) for separating random noise from said first signal to provide a pure signature.

4. The system of claim 3 wherein said processing means includes first subtracting means (34) coupled to the output of said input means (20) and the output of said scene averaging means (32) for subtracting said pure signature from said first signal to provide a pure noise signal.

5. The system of claims 3 or 4 wherein said processing means includes memory means (36) coupled to the output of said scene averaging means (32) for providing a fixed pattern noise signal from said pure signature.

6. The system of claim 5 wherein said processing means includes second subtracting means (38) coupled to the output of said memory means (36) and the output of said scene averaging means (32) for subtracting said fixed pattern noise signal from said pure signature to provide a pure signal.

7. The system of claim 6 wherein said peak and valley detector (44) includes peak means for detecting the value of said pure singal that is greater than a first value and valley means for detecting the value of said pure signal that is less than a second value.

8. The system of any of the preceding claims wherein a function of said first data is provided as an address to said lookup table (46) and said output is provided from said lookup table (46) in response thereto.

9. The system of claim 8 wherein said function of said first data includes a peak value P, a valley value V, and a noise component N.

10. The system of claim 9 wherein said function is P-V/P+V.

11. The system of claim 9 wherein said function is P+V/N.

12. The system of any of the preceding claims wherein said lookup table (46) includes interpolator means for estimating the values of said stored data from a derived function of said first data.

13. A method for automatically testing a sensor system (5) by evaluating the output of said sensor system (5) with respect to a known target (2), said method including the steps of:
receiving (20) optical output from said sensor system (5) and providing a first signal in response thereto;
characterized by
separating (32,34,36,38) said first signal pure signal and pure noise components and providing (42,44) first data (P,V,N) therefrom;
said separating and providing step comprising detecting (44) the peak and valley values (P,V) of said pure signal and determining (42) the portions (N) of said pure noise signal that are within specified ranges of values; and
comparing (46) said first data with stored data and indicating the acceptability of said sensor system (5).

## Patentansprüche

1. System zum automatisierten Testen eines Sensorsystems *(5)* durch Bewerten des Ausgangs des Sensorsystems *(5)* bezüglich einer bekannten Auftreffplatte *(2)*, wobei das automatisierte Testsystem *(10)*
eine Eingangseinrichtung *(20)* zum Empfangen eines optischen Ausgangs von dem Sensorsystem *(5)* und zum Bereitstellen eines ersten Signals als Antwort darauf aufweist;
**gekennzeichnet durch**
eine Verarbeitungseinrichtung *(30, 42, 44)* zum Trennen des ersten Signals in ein reines Signal und reine Rauschkomponenten und zum Bereitstellen von ersten Datenwerten *(P, V, N)* davon, wobei die Verarbeitungseinrichtung einen Spitzen- und Taldetektor *(44)* zum Erfassen der Spitzen- und Talwerte *(P, V)* des reinen Signals enthält, und wobei die Verarbeitungseinrichtung *(30)* eine Histogrammeinrichtung *(42)* zum Bestimmen der Teile *(N)* des reinen Rauschsignals enthält, welche innerhalb bestimmter Bereiche von Werten liegen; und
eine Verweistabelle *(46)*, welche gespeicherte Datenwerte enthält, wobei die ersten Datenwerte als Eingang der Verweistabelle *(46)* bereitgestellt werden und ein Ausgang als Antwort darauf bereitgestellt wird, welcher die Annehmbarkeit des Sensorsystems *(5)* anzeigt.

2. System nach Anspruch 1, dadurch gekennzeichnet, daß das Sensorsystem *(5)* eine Kameraeinrichtung *(6)* enthält.

3. System nach den Ansprüchen 1 oder 2, dadurch gekennzeichnet, daß die Verarbeitungseinrichtung eine Szenemittlungseinrichtung *(32)* enthält, welche an den Ausgang der Eingangseinrichtung *(20)* zum Trennen des statistischen Rauschens von dem ersten Signal gekoppelt ist, um eine reine Kennzeichnung bereitzustellen.

4. System nach Anspruch 3, dadurch gekennzeichnet, daß die Verarbeitungseinrichtung eine erste Subtraktionseinrichtung *(34)* enthält, welche an den Ausgang der Eingangseinrichtung *(20)* und an den Ausgang der Szenemittlungseinrichtung *(32)* zum Subtrahieren der reinen Kennzeichnung von dem ersten Signal gekoppelt ist, um ein reines Rauschsignal bereitzustellen.

5. System nach den Ansprüchen 3 oder 4, dadurch gekennzeichnet, daß die Verarbeitungseinrichtung eine Speichereinrichtung *(36)* enthält, welche an den Ausgang der Szenemittlungseinrichtung *(32)* zum Bereitstellen eines festen periodischen Störungssignals von der reinen Kennzeichnung gekoppelt ist.

6. System nach Anspruch 5, dadurch gekennzeichnet, daß die Verarbeitungseinrichtung eine zweite Subtraktionseinrichtung *(38)* enthält, welche an den Ausgang der Speichereinrichtung *(36)* und an den Ausgang der Szenemittlungseinrichtung *(32)* zum Subtrahieren des festen periodischen Störungssignals von der reinen Kennzeichnung gekoppelt ist, um ein reines Signal bereitzustellen.

7. System nach Anspruch 6, dadurch gekennzeichnet, daß der Spitzen- und Taldetektor *(44)* eine Spitzeneinrichtung zum Erfassen des Werts des reinen Signals enthält, welcher größer als ein erster Wert ist, und eine Taleinrichtung zum Erfassen des Werts des reinen Signals, welcher kleiner als ein zweiter Wert ist.

8. System nach irgendeinem der vorhergehenden Ansprüche, dadurch gekennzeichnet, daß eine Funktion von ersten Daten als Adresse der Verweistabelle *(46)* bereitgestellt wird, und der Ausgang der Verweistabelle *(46)* als Antwort darauf bereitgestellt wird.

9. System nach Anspruch 8, dadurch gekennzeichnet, daß die Funktion der ersten Daten einen Spitzenwert P, einen Talwert V und eine Rauschkomponente N enthält.

10. System nach Anspruch 9, dadurch gekennzeichnet, daß die Funktion P-V/P+V ist.

11. System nach Anspruch 9, dadurch gekennzeichnet, daß die Funktion P+V/N ist.

12. System nach irgendeinem der vorangehenden Ansprüche, dadurch gekennzeichnet, daß die Verweistabelle *(46)* eine Interpolatoreinrichtung zum Schätzen der Werte der gespeicherten Daten aus einer abgeleiteten Funktion der ersten Daten enthält.

13. Verfahren zum automatischen Testen eines Sensorsystems durch Bewerten des Ausgangs des Sensorsystems *(5)* bezüglich einer bekannten Auftreffplatte *(2)*, wobei das Verfahren die Schritte beinhaltet:
Empfangen *(20)* des optischen Ausgangs von dem Sensorsystem *(5)* und Bereitstellen eines ersten Signals als Antwort darauf;
**gekennzeichnet durch**
Trennen *(32, 34, 36, 38)* des ersten Signals in ein reines Signal und reine Rauschkomponenten und Bereitstellen *(42, 44)* von ersten Daten *(P, V, N)* davon;
den Schritt des Trennens und Bereitstellens, welcher Erfassen *(44)* der Spitzen- und Talwerte *(P, V)* des reinen Signals und Bestimmen *(42)* der Teile *(N)* des reinen Rauschsignals umfaßt, welche innerhalb von spezifizierten Bereichen von Werten liegen; und
Vergleichen *(46)* der ersten Daten mit gespeicherten Daten und Anzeigen der Annehmbarkeit des Sensorsystems *(5)*.

## Revendications

1. Un système pour le test automatisé d'un système de capteur (5) par l'évaluation de l'information de sortie du système de capteur (5) pour une cible connue (2), ce système de test automatisé (10) comprenant :
des moyens d'entrée (20) destinés à recevoir une information de sortie optique provenant du système de capteur (5) et à produire en réponse un premier signal;
caractérisé par
des moyens de traitement (30, 42, 44) pour décomposer ce premier signal en composantes de signal pur et de bruit pur, et pour fournir des premières données (P, V, N) à partir de ces composantes, dans lequel les moyens de traitement comprennent un détecteur de crête et de creux (44) qui est destiné à détecter les valeurs de crête et de creux (P, V) du signal pur, et les moyens de traitement (34) comprennent des moyens de génération d'histogramme (42) qui sont destinés à déterminer les parties (N) du signal de bruit pur qui se trouvent à l'intérieur de plages de valeurs spécifiées; et
une table (46) contenant des données enregistrées, les premières données étant appliquées à titre d'information d'entrée à la table (46), et celle-ci fournissant en réponse une information de sortie qui indique l'acceptabilité du système de capteur (5).

2. Le système de la revendication 1, dans lequel le système de capteur (5) comprend des moyens à caméra (6).

3. Le système des revendications 1 ou 2, dans lequel les moyens de traitement comprennent des moyens de détermination de moyenne de scène (32) qui sont couplés à la sortie des moyens d'entrée (20) pour séparer du bruit aléatoire vis-à-vis du premier signal, pour donner une signature pure.

4. Le système de la revendication 3, dans lequel les moyens de traitement comprennent des premiers moyens de soustraction (34) couplés à la sortie des moyens d'entrée (20) et à la sortie des moyens de détermination de moyenne de scène (32), pour soustraire du premier signal la signature pure, de façon à donner un signal de bruit pur.

5. Le système des revendications 3 ou 4, dans lequel les moyens de traitement comprennent des moyens de mémoire (36) couplés à la sortie des moyens de détermination de moyenne de scène (32) pour donner un signal de bruit de configuration fixe, à partir de la signature pure.

6. Le système de la revendication 5, dans lequel les moyens de traitement comprennent des seconds moyens de soustraction (38) qui sont couplés à la sortie des moyens de mémoire (36) et à la sortie des moyens de détermination de moyenne de scène (32), pour soustraire de la signature pure le signal de bruit de configuration fixe, pour donner un signal pur.

7. Le système de la revendication 6, dans lequel le détecteur de crête et de creux (44) comprend des moyens de détection de crête destinés à détecter la valeur du signal pur qui est supérieure à une première valeur, et des moyens de détection de creux qui sont destinés à détecter la valeur du signal pur qui est inférieure à une seconde valeur.

8. Le système de l'une quelconque des revendications précédentes, dans lequel une fonction des premières données est fournie à titre d'adresse à la table (46), et la table (46) fournit en réponse l'information de sortie précitée.

9. Le système de la revendication 8, dans lequel la fonction des premières données comprend une valeur de crête P, une valeur de creux V et une composante de bruit N.

10. Le système de la revendication 9, dans lequel la fonction précitée est P-V/P+V.

11. Le système de la revendication 9, dans lequel la fonction précitée est P+V/N.

12. Le système de l'une quelconque des revendications précédentes, dans lequel la table (46) contient des moyens interpolateurs qui sont destinés à estimer les valeurs des données enregistrées à partir d'une fonction dérivée des premières données.

13. Un procédé pour tester automatiquement un système de capteur (5), par l'évaluation de l'information de sortie du système de capteur (5) pour une cible connue (2), ce procédé comprenant les étapes suivantes :
on reçoit (20) une information de sortie optique du système de capteur (5), et on produit un premier signal sous l'effet de cette information;
caractérisé en ce que
on sépare (32, 34, 36, 38) le premier signal en composantes de signal pur et de bruit pur, et on génère (42, 44) des premières données (P, V, N) à partir de ces composantes;
l'étape de séparation et de génération comprenant la détection (44) des valeurs de crête et de creux (P, V) du signal pur, et la détermination (42) des parties (N) du signal de bruit pur qui sont comprises à l'intérieur de plages de valeurs spécifiées; et
on compare (46) les premières données avec des données enregistrées et on indique l'acceptabilité du système de capteur (5).
